# EUROPÄISCHE PATENTSCHRIFT

(11) **EP 4 125 058 B1**
(45) Veröffentlichungstag und Bekanntmachung des Hinweises auf die Patenterteilung: **26.08.2026**
(21) Anmeldenummer: 21188524.9
(22) Anmeldetag: 29.07.2021
(51) Int. Cl.: G06V 20/52

(54) **VERFAHREN UND ANORDNUNG ZUM KALIBRIEREN EINES PERSONENSTROMSIMULATORS**
METHOD AND ASSEMBLY FOR CALIBRATION OF A SIMULATOR OF A FLOW OF PEOPLE
PROCÉDÉ ET AGENCEMENT D'ÉCHANTILLONNAGE D'UN SIMULATEUR DE FLUX DE PERSONNES

(43) Veröffentlichungstag der Anmeldung: 01.02.2023
(73) Patentinhaber: Siemens Mobility GmbH, 80997 München (DE)
(72) Erfinder: Klein, Wolfram, 85579 Neubiberg (DE); Mayer, Hermann Georg, 83209 Prien am Chiemsee (DE); Pancini Fitzek, Theresa, 10963 Berlin (DE)
(74) Vertreter: Siemens Patent Attorneys

(56) Entgegenhaltungen:
- WO-A1-2011/032782
- BEIBEI ZHAN ET AL: "Crowd analysis: a survey", MACHINE VISION AND APPLICATIONS, SPRINGER, BERLIN, DE, vol. 19, no. 5-6, 10 April 2008 (2008-04-10), pages 345 - 357, XP019651735, ISSN: 1432-1769, DOI: 10.1007/S00138-008-0132-4
- YANG SHANWEN ET AL: "A review on crowd simulation and modeling", GRAPHICAL MODELS, ELSEVIER, SAN DIEGO, CA, US, vol. 111, 27 July 2020 (2020-07-27), XP086271608, ISSN: 1524-0703, [retrieved on 20200727], DOI: 10.1016/J.GMOD.2020.101081
- LIU JIA ET AL: "Simulation of passenger motion in metro stations during rush hours based on video analysis", AUTOMATION IN CONSTRUCTION, ELSEVIER, AMSTERDAM, NL, vol. 107, 6 September 2019 (2019-09-06), XP085856697, ISSN: 0926-5805, [retrieved on 20190906], DOI: 10.1016/J.AUTCON.2019.102938

## Beschreibung

Simulationen und insbesondere Vorhersagen von Personenströmen, zum Beispiel auf Bahnsteigen, bei öffentlichen Veranstaltungen, auf Flughäfen, in Sportstadien oder in anderen Bereichen, in denen sich eine Vielzahl von Personen bewegen, liefern oft wertvolle Informationen zur Erkennung von drohenden Personenstaus, zur Optimierung von Fluchtwegen, zur Optimierung einer Personenabfertigung oder zur Lenkung von Personenströmen. Darüber hinaus werden Personenstromsimulationen in zunehmendem Maße bereits beim Entwurf von Bauwerken verwendet, um mögliche Engstellen zu ermitteln oder Fluchtwege zu optimieren.

Damit eine Simulation ein reales Bewegungsverhalten einer Vielzahl von Personen möglichst gut abbildet, ist das zugrundeliegende Szenario simulativ möglichst realistisch nachzubilden. Zu diesem Zweck wird oft ein reales Bewegungsverhalten von Personen im zu simulierenden Bereich erfasst und analysiert, um darauf basierend ein Simulationsmodell zu erstellen. Eine solche Erstellung von Simulationsmodellen erweist sich jedoch häufig als verhältnismäßig aufwendig.

Aus den Publikationen US2012/0105615A1 und WO2011/0327821A1 sind Verfahren bekannt, bei denen Simulationsmodelle zumindest in Teilen automatisch konfiguriert werden.

Es ist Aufgabe der vorliegenden Erfindung ein Verfahren und eine Anordnung zum Kalibrieren eines Personenstromsimulators anzugeben, die eine effizientere Kalibrierung erlauben.

Gelöst wird diese Aufgabe durch ein Verfahren mit den Merkmalen des Patentanspruchs 1, durch eine Anordnung mit den Merkmalen des Patentanspruchs 9, durch ein Computerprogrammprodukt mit den Merkmalen des Patentanspruchs 10 sowie durch ein computerlesbares Speichermedium mit den Merkmalen des Patentanspruchs 11.

Zum Kalibrieren eines Personenstromsimulators für einen vorgegebenen Bereich werden mittels einer Kamera fortlaufend Bilder im Bereich aufgenommen. Der Bereich kann dabei insbesondere ein Bahnsteig, ein Flughafen, ein Zug, ein Flugzeug, ein Schiff, ein öffentliches oder privates Bauwerk oder Gebäude, eine Räumlichkeit, ein Gebiet, ein Gelände, ein Bezirk, ein Wohn- oder Geschäftsviertel, ein Sportstadion oder ein anderer Bereich sein, in dem sich eine Vielzahl von Personen bewegt. Weiterhin werden aus einer zeitlichen Abfolge von aufgenommenen Bildern Laufwege von im Bereich befindlichen Personen ermittelt. Für die ermittelten Laufwege werden jeweils eine Startzone und eine Zielzone im Bereich ermittelt. Erfindungsgemäß wird dann für Laufwege mit gemeinsamer Startzone und gemeinsamer Zielzone eine laufwegübergreifende, start- und zielzonenspezifische Verbindungsangabe ermittelt. Anhand der ermittelten Verbindungsangaben wird der Personenstromsimulator darauf trainiert, Personenströme zwischen den Startzonen und Zielzonen zu reproduzieren. Durch das Training wird der Personenstromsimulator für eine Personenstromsimulation im Bereich kalibriert.

Zum Ausführen des erfindungsgemäßen Verfahrens sind eine Anordnung zum Kalibrieren eines Personenstromsimulators, ein Computerprogrammprodukt sowie ein computerlesbares, vorzugsweise nichtflüchtiges Speichermedium vorgesehen.

Das erfindungsgemäße Verfahren, die erfindungsgemäße Anordnung sowie das erfindungsgemäße Computerprogrammprodukt können insbesondere mittels eines oder mehrerer Computer, eines oder mehrerer Prozessoren, anwendungsspezifischer integrierter Schaltungen (ASIC), digitaler Signalprozessoren (DSP), einer Cloud-Infrastruktur und/oder sogenannter "Field Programmable Gate Arrays" (FPGA) ausgeführt werden.

Ein Vorteil der Erfindung ist insbesondere darin zu sehen, dass Personenstromsimulatoren auf einfache Weise an im Bereich beobachtete Personenlaufwege angepasst werden können. Darüber hinaus können durch die laufwegübergreifenden Verbindungsangaben simulationsrelevante Charakteristika für eine Vielzahl von Laufwegen gemeinsam beschrieben und dadurch zusammengefasst werden. Dies erlaubt in vielen Fällen eine signifikante Reduktion eines für ein Training von Personenstromsimulatoren erforderlichen Aufwands.

Gemäß einer vorteilhaften Ausführungsform der Erfindung können beim Training des Personenstromsimulators Kalibrierungsparameter des Personenstromsimulators variiert werden und abhängig von den variierten Kalibrierungsparametern Laufwege durch den Bereich simuliert werden. Weiterhin können aus den simulierten Laufwegen simulierte Verbindungsangaben abgeleitet und eine Abweichung der simulierten Verbindungsabgaben von den ermittelten Verbindungsangaben ermittelt werden. Die Kalibrierungsparameter können dann derart variiert werden, dass die Abweichung verringert, vorzugsweise minimiert wird. Unter einer Minimierung sei hier und im Folgenden auch eine Annäherung an ein Minimum verstanden. Zu diesem Zweck steht eine Vielzahl von bekannten Optimierungsverfahren zur Verfügung.

Vorteilhafterweise können die Verbindungsangaben in einer durch die Startzonen und die Zielzonen indizierten Verbindungsmatrix gespeichert werden. Insbesondere können die ermittelten Verbindungsangaben in einer ersten Verbindungsmatrix und die simulierten Verbindungsangaben in einer zweiten Verbindungsmatrix gespeichert werden. Damit kann eine Abweichung zwischen der ersten Verbindungsmatrix und der zweiten Verbindungsmatrix ermittelt werden, und die Kalibrierungsparameter können derart variiert werden, dass diese Abweichung verringert, vorzugsweise minimiert wird. Auf diese Weise kann der Personenstromsimulator darauf trainiert werden, die erste Verbindungsmatrix zu reproduzieren.

Weiterhin kann eine Verbindungsangabe zu einer jeweiligen Startzone und einer jeweiligen Zielzone eine Anzahl von ermittelten Laufwegen zwischen der jeweiligen Startzone und der jeweiligen Zielzone, ein Geschwindigkeitsprofil dieser Laufwege, einen durchschnittlichen, minimalen und/oder maximalen Zeitbedarf für diese Laufwege, eine Personendichte entlang dieser Laufwege und/oder einen frühesten und/oder spätesten Zeitpunkt eines Loslaufens von der jeweiligen Startzone und/oder einen frühesten und/oder spätesten Zeitpunkt einer Ankunft in der jeweiligen Zielzone umfassen. Darüber hinaus kann eine Verbindungsangabe auch vorgegebene laufwegrelevante Personenmerkmale betreffen und beispielsweise eine Anzahl oder einen Anteil von Personen, die ein Gepäckstück tragen, angeben.

Nach einer vorteilhaften Ausführungsform der Erfindung können in den aufgenommenen Bildern Positionen von Personen erfasst werden. Zu diesem Zweck steht eine Vielzahl von bekannten Mustererkennungsverfahren zur Verfügung. Damit kann ein jeweiliger Laufweg anhand von in aufeinanderfolgenden Bildern erfassten Positionen einer Person ermittelt werden. Durch die einzelnen Positionen einer jeweiligen Person kann ein Polygonzug gelegt werden, durch den der jeweilige Laufweg dargestellt oder repräsentiert wird.

Nach einer weiteren vorteilhaften Ausführungsform der Erfindung kann ein räumlicher und/oder zeitlicher Abstand zwischen einer Endposition eines ersten Laufwegs und einer Startposition eines zweiten Laufwegs ermittelt werden. Abhängig vom ermittelten Abstand kann dann der erste Laufweg mit dem zweiten Laufweg zu einem gemeinsamen Laufweg zusammengefasst oder vereinigt werden. Alternativ oder zusätzlich kann eine jeweilige Laufrichtung an der Endposition des ersten Laufwegs und/oder an der Startposition des zweiten Laufwegs erfasst werden. Die Ermittlung eines gemeinsamen Laufwegs kann dann abhängig von der jeweiligen Laufrichtung erfolgen. Auf diese Weise können Laufwege von Personen über verschiedene Teilbereiche oder über Bilder von verschiedenen Kameras hinweg fortgesetzt werden.

Erfindungsgemäß wird eine Menge von simulationsrelevanten Startzonen und Zielzonen ermittelt. Damit wird für einen jeweiligen Laufweg ermittelt, in welche der simulationsrelevanten Startzonen eine Startposition dieses Laufwegs und/oder in welche der simulationsrelevanten Zielzonen eine Zielposition dieses Laufwegs fällt. Die simulationsrelevanten Startzonen und Zielzonen können insbesondere Eingänge, Ausgänge, Abfertigungsstellen, Engstellen, Wartebereiche und/oder andere Zonen umfassen, die einen signifikanten Einfluss auf die Laufwege, insbesondere auf deren Zeitbedarf haben. Auf diese Weise können gezielt Start- und Zielzonen ermittelt werden, für die die Personenstromsimulation besonders sensitiv ist.

Weiterhin wird für den Fall, dass eine Startposition des jeweiligen Laufwegs in keine der simulationsrelevanten Startzonen oder eine Endposition dieses Laufwegs in keine der simulationsrelevanten Zielzonen fällt, dieser Laufweg mit einem weiteren Laufweg zu einem gemeinsamen Laufweg zusammengefasst. Insbesondere können dabei Laufwege unterschiedlicher Personen zu einem gemeinsamen Laufweg zusammengefasst oder vereinigt werden. Die Zusammenfassung von Laufwegen kann abhängig von einem räumlichen Abstand, einem zeitlichen Abstand und/oder einer Laufrichtung von Teilen der zusammenzufassenden Laufwege erfolgen. Die Zusammenfassung erfolgt vorzugsweise derart, dass die Start- und Endposition des gemeinsamen Laufwegs in eine simulationsrelevante Startzone bzw. in eine simulationsrelevante Zielzone fällt. Auf diese Weise können Laufwege erzeugt werden, für die die Personenstromsimulation besonders sensitiv ist.

Gemäß einer vorteilhaften Weiterbildung der Erfindung kann ein Laufverhalten von im Bereich befindlichen Personen durch Kalibrierungsparameter des Personenstromsimulators dargestellt werden. Das Laufverhalten kann dann durch Verarbeitung der Kalibrierungsparameter ausgewertet werden. Auf diese Weise kann das eine Vielzahl von Laufwegen umfassende Laufverhalten durch die Kalibrierungsparameter gewissermaßen kodiert werden. Die Kalibrierungsparameter haben in vielen Fällen einen erheblich geringeren Speicherbedarf als die Vielzahl von Laufwegen und führen somit zu einer effizienten Datenkompression. Eine solche Reduzierung von Modellparametern wird häufig auch als Modell-Ordnungs-Reduktion oder MOR bezeichnet.

Nach einer weiteren vorteilhaften Weiterbildung der Erfindung können mittels des kalibrierten Personenstromsimulators Personenströme im Bereich anhand von aktuell aufgenommenen Bildern simuliert und/oder prädiziert, d.h. in die Zukunft extrapoliert werden.

Dabei kann abhängig von den simulierten und/oder prädizierten Personenströmen eine Personenleitinformation, eine Fluchtwegangabe, eine Wegeangabe, eine Richtungsangabe, ein Warnsignal, ein Alarmsignal und/oder ein Steuersignal, z.B. zum Öffnen von Fluchtwegen ausgegeben werden.

Ein Ausführungsbeispiel der Erfindung wird nachfolgend anhand der Zeichnung näher erläutert. Dabei veranschaulichen jeweils in schematischer Darstellung:
- Fig. 1:: Eine Erfassung von Laufwegen von Personen in einem vorgegebenen Bereich,
- Fig. 2:: Eine Ermittlung einer laufwegübergreifenden Verbindungsangabe für mehrere Laufwege und
- Fig. 3:: Eine erfindungsgemäße Anordnung zum Kalibrieren eines Personenstromsimulators.

Insofern in den Figuren gleiche oder korrespondierende Bezugszeichen verwendet werden, bezeichnen diese Bezugszeichen die gleichen oder korrespondierende Entitäten, die insbesondere wie im Zusammenhang mit der betreffenden Figur beschrieben, implementiert oder ausgestaltet sein können.

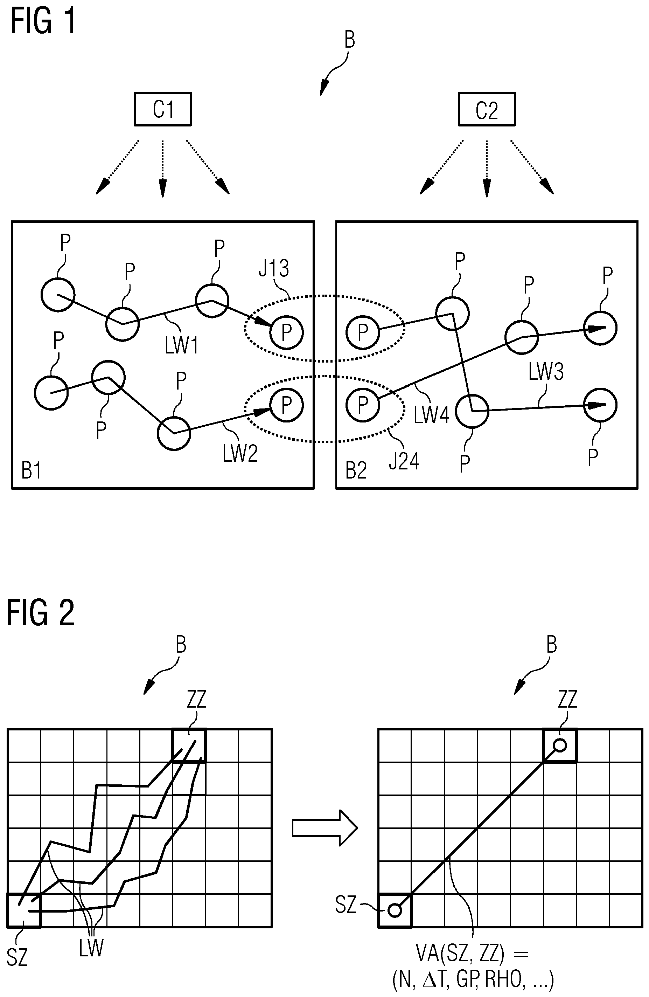

Figur 1 veranschaulicht eine Erfassung von Laufwegen LW1, LW2, LW3 und LW4 von Personen P in einem vorgegebenen Bereich B. Der Bereich B kann dabei ein Bahnsteig, ein Flughafen, ein Zug, ein Flugzeug, ein Schiff, ein öffentliches oder privates Bauwerk oder Gebäude, eine Räumlichkeit, ein Gebiet, ein Gelände, ein Bezirk, ein Wohn- oder Geschäftsviertel, ein Sportstadion oder ein anderer Bereich sein, in dem sich eine Vielzahl von Personen P bewegt.

Im Bereich B sind Kameras C1 und C2 installiert, die fortlaufend Bilder im Bereich B aufnehmen. Die Kamera C1 nimmt hierbei Bilder in einem Teilbereich B1 des Bereichs B auf und die Kamera C2 Bilder in einem Teilbereich B2 des Bereichs B. Die Teilbereiche B1 und B2 können sich hierbei überlappen oder disjunkt sein.

Die Kameras C1 und C2 erzeugen jeweils eine zeitliche Abfolge von aufgenommenen, mit Zeitstempeln versehenen Bildern des Teilbereichs B1 bzw. B2. In den aufgenommenen Bildern werden jeweils Positionen von darauf abgebildeten Personen P mittels einer Mustererkennung erfasst. Die Mustererkennung arbeitet vorzugsweise anonym und speichert insbesondere keine Gesichtsmerkmale oder andere persönlichen Merkmale der abgebildeten Personen P.

Gegebenenfalls werden aber Bildmuster erfasst, die es erlauben, eine betreffende Person auf einem nachfolgenden Bild oder einem von einer anderen Kamera aufgenommenem Bild wiederzuerkennen und so demselben Laufweg zuzuordnen. Zu diesem Zweck sind eine Vielzahl von bekannten Mustererkennungsverfahren verfügbar. Die durch die Mustererkennung erfassten Positionen der Personen P werden durch räumliche, ebene oder lineare Koordinaten dargestellt, die mit einem jeweiligen Zeitstempel des betreffenden Bildes versehen sind. Durch die einzelnen zeitlich aufeinanderfolgenden Positionen einer jeweiligen Person P kann ein Polygonzug mit Start- und Endposition gelegt werden, durch den ein Laufweg einer jeweiligen Person P dargestellt oder repräsentiert wird. In dem durch Figur 1 veranschaulichten Ausführungsbeispiel sind im Teilbereich B1 die Laufwege LW1 und LW2 und im Teilbereich B2 die Laufwege LW3 und LW4 in Form von Polygonzügen dargestellt.

Um teilbereichsübergreifende Laufwege zu ermitteln, werden im vorliegenden Ausführungsbeispiel Laufwege gesucht, die als Fortsetzung eines früheren Laufwegs aufgefasst werden können. Hat zum Beispiel eine Person P einen Sichtbereich der Kamera C1 an einer Endposition verlassen und taucht kurz darauf, insbesondere unterhalb eines vorgegebenen zeitlichen Schwellwerts auf einem nachfolgenden Bild einer anderen Kamera, hier C2 an einer benachbarten Position wieder auf, so kann in der Regel davon ausgegangen werden, dass es sich um ein- und dieselbe Person P handelt.

Im vorliegenden Ausführungsbeispiel wird für die Laufwege LW1 bis LW4 nach Verbindungsstellen gesucht, bei denen ein räumlicher und/oder zeitlicher Abstand zwischen einer Endposition eines ersten Laufwegs und einer Startposition eines zweiten Laufwegs unterhalb eines vorgegebenen Schwellwerts liegt. Für das vorliegende Ausführungsbeispiel sei angenommen, dass die Endposition des Laufwegs LW1 zeitlich und räumlich benachbart zur Anfangsposition des Laufwegs LW3 ist, und dass die Endposition des Laufwegs LW2 zur Anfangsposition des Laufwegs LW4 benachbart ist. Die jeweilige Verbindungsstelle ist in Figur 1 durch das Bezugszeichen J13 bzw. J24 angedeutet. Entsprechend werden die Laufwege LW1 und LW3 sowie die Laufwege LW2 und LW4 jeweils zu einem gemeinsamen Laufweg vereinigt. Bei der Ermittlung der Verbindungsstellen J13 und J24 kann vorteilhafterweise auch eine jeweilige Laufrichtung an den jeweiligen Endpositionen bzw. Anfangspositionen berücksichtigt werden. Auf diese Weise können durchgehende oder zumindest teilbereichsübergreifende Laufwege durch den Bereich B ermittelt werden.

Die Laufwege, hier LW1 bis LW4, werden für die von den Kameras C1 und C3 erfassten Personen P innerhalb eines vorgegebenen Zeitraums von beispielsweise 30 Minuten zum Beispiel auf einem U-Bahnsteig für ihre Weiterverarbeitung gesammelt. Auf diese Weise kann eine Schar von Polygonzügen ermittelt werden, die ein konkret beobachtetes Laufverhalten von Personen P über einen vorgegebenen Zeitraum beschreiben. Bei der Wahl des Beobachtungszeitraums wird vorzugsweise angestrebt, dass das beobachtete Laufverhalten möglichst repräsentativ für den Bereich B ist.

Anhand der beobachteten Laufwege soll ein Personenstromsimulator darauf trainiert werden, das Laufverhalten von Personen im Bereich B möglichst genau nachzubilden. Mit Hilfe des trainierten Personenstromsimulators kann ein Laufverhalten von Personen dann verallgemeinert werden und insbesondere auf zukünftige Zeiträume mit unbekanntem Personenverhalten extrapoliert werden. Das Laufverhalten wird dann nicht mehr durch eine Schar von Polygonzügen, sondern durch Kalibrierungsparameter des trainierten Personenstromsimulators beschrieben oder kodiert. Neben einer Simulation oder Vorhersage des Laufverhaltens kann so auch eine kompaktere Beschreibung von beobachteten Bewegungsdaten erreicht werden. Dies führt in vielen Fällen zu einer effizienten Modellordnungsreduktion.

Figur 2 veranschaulicht eine Ermittlung einer laufwegübergreifenden Verbindungsangabe VA für mehrere Laufwege LW im Bereich B. Die Laufwege LW können hierbei wie oben beschrieben erfasst werden.

Durch laufwegübergreifende Verbindungsangaben VA können simulationsrelevante Charakteristika für eine Vielzahl von Laufwegen gemeinsam beschrieben und dadurch zusammengefasst werden. Zu diesem Zweck werden zunächst simulationsrelevante Startzonen SZ sowie simulationsrelevante Zielzonen ZZ für Laufwege LW im Bereich B ermittelt. Dies können insbesondere Zonen mit einem erhöhten Personenaufkommen oder andere Zonen mit einem signifikanten Einfluss auf die Laufwege LW sein. Aus Übersichtlichkeitsgründen sind in Figur 2 nur eine einzige Startzone SZ und eine einzige Zielzone ZZ im Bereich B explizit gekennzeichnet.

Für die gegebenen Startzone SZ und die gegebene Zielzone ZZ werden nun diejenigen Laufwege LW ermittelt, deren Startposition jeweils in die Startzone SZ und deren Endposition jeweils in die Zielzone ZZ fällt. Alle diese Laufwege LW beginnen somit in der Startzone SZ und enden in der Zielzone ZZ.

Vorteilhafterweise kann für Laufwege, deren Startposition oder Zielposition in keine der gegebenen Startzonen oder Zielzonen fällt, geprüft werden, ob dieser Laufweg mit einem anderen Laufweg wie oben beschrieben zusammengefasst werden kann, dessen Startposition bzw. Zielposition in eine gegebene Startzone bzw. Zielzone fällt. Auf diese Weise können auch mehr als zwei beobachtete Laufwege zu einem gemeinsamen, von einer gegebenen Startzone zu einer gegebenen Zielzone verlaufenden Laufweg zusammengefasst werden.

Im vorliegenden Ausführungsbeispiel wird für die von der Startzone SZ zur Zielzone ZZ verlaufenden Laufwege LW eine Verbindungsangabe VA ermittelt. Die Verbindungsangabe VA umfasst dabei eine Anzahl N der zwischen der Startzone SZ und der Zielzone ZZ verlaufenden Laufwege LW, ein Geschwindigkeitsprofil GP dieser Laufwege sowie einen durchschnittlichen, minimalen sowie maximalen Zeitbedarf ΔT für diese Laufwege LW. Darüber hinaus kann durch die Verbindungsangabe VA auch eine Personendichte RHO entlang dieser Laufwege LW spezifiziert werden und/oder ein frühester und/oder spätester Zeitpunkt eines Loslaufens von der Startzone SZ und/oder ein frühester und/oder spätester Zeitpunkt einer Ankunft in der Zielzone ZZ.

Die laufwegübergreifende Verbindungsangabe VA ist spezifisch für die Startzone SZ und die Zielzone ZZ und wird mithin dem Paar (SZ, ZZ) zugeordnet. Entsprechend können auch für alle anderen Paare aus je einer Startzone und einer Zielzone entsprechende Verbindungsangaben ermittelt werden. Die so ermittelten Verbindungsangaben werden dann vorzugsweise in einer durch Startzone und Zielzone indizierten Verbindungsmatrix VA(SZ,ZZ) gespeichert. Durch die Verbindungsmatrix VA(SZ,ZZ) werden somit simulationsrelevante Charakteristika für eine Vielzahl von Laufwegen gemeinsam beschrieben und dadurch zusammengefasst.

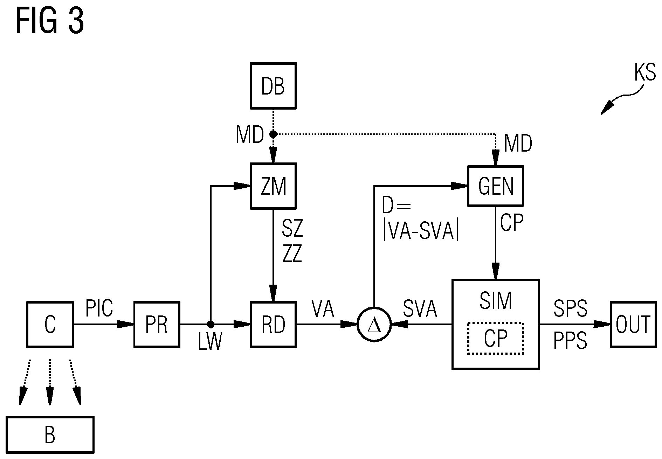

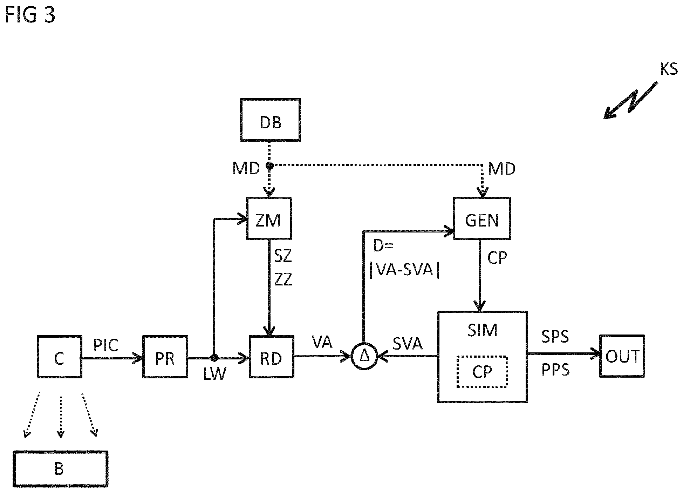

Figur 3 veranschaulicht eine erfindungsgemäße Anordnung KS zum Kalibrieren eines Personenstromsimulators SIM. Die Anordnung KS ist computergesteuert und verfügt über einen oder mehreren Prozessoren zum Ausführen der erfindungsgemäßen Verfahrensschritte sowie über einen oder mehrere Speicher zum Speichern von durch die Anordnung KS zu verarbeitenden Daten.

Die Anordnung KS umfasst eine oder mehrere Kameras C, durch die fortlaufend jeweils mit einem Zeitstempel versehene Bilder PIC eines Bereichs B aufgenommen werden.

Die zeitliche Abfolge der aufgenommenen Bilder PIC wird von den Kameras C zu einem Mustererkennungsmodul PR der Anordnung KS übermittelt. Das Mustererkennungsmodul PR erfasst anonym Positionen von Personen in zeitlich aufeinanderfolgenden Bildern PIC und ordnet diese wie oben beschrieben Laufwegen LW der sich im Bereich B bewegenden Personen zu. Die Laufwege LW werden vom Mustererkennungsmodul PR vorzugsweise in Form von Polygonzügen in ein Zonenermittlungsmodul ZM sowie in ein Reduktionsmodul RD der Anordnung KS eingespeist.

Das Zonenermittlungsmodul ZM dient dem Zweck, vorzugsweise anhand der Laufwege LW simulationsrelevante Startzonen SZ und Zielzonen ZZ zu ermitteln, für die die Personenstromsimulation besonders sensitiv ist. Dies können insbesondere Eingänge, Ausgänge, Abfertigungsstellen, Engstellen, Wartebereiche und/oder andere Zonen sein, die einen signifikanten Einfluss auf Laufwege im Bereich B und insbesondere auf deren Zeitbedarf haben.

Die Zonenermittlung wird vorzugsweise durch Modelldaten MD initialisiert, die den Bereich B zumindest teilweise modellieren. Die Modelldaten MD können aus einer Datenbank DB in das Zonenermittlungsmodul ZM eingespeist werden. Die Modelldaten MD können insbesondere eine Geometrie, eine räumliche Anordnung oder spezifische Gebäudeelemente, wie zum Beispiel Wände, Gänge, Treppen, Böden oder Türen des Bereichs B in maschinenlesbarer Form beschreiben.

Die Startzonen SZ und Zielzonen ZZ können durch das Zonenermittlungsmodul ZM nun so ermittelt werden, dass zunächst anhand der Modelldaten MD ein Gitter über den Bereich B gelegt wird und für jede Gitterzelle anhand der Laufwege LW festgestellt wird, wie viele Laufwege über die betreffende Gitterzelle führen oder dort ihre Start- oder Zielposition haben. Als simulationsrelevante Startzonen SZ und Zielzonen ZZ können dann diejenigen Gitterzellen selektiert werden, in denen in einem vorgegebenen Zeitintervall besonders viele Personen loslaufen, ankommen und/oder durchlaufen. Darüber hinaus können so auch Gitterzellen als simulationsrelevante Startzellen SZ oder Zielzellen ZZ selektiert werden, in denen Personen besonders lange verweilen, wie zum Beispiel Wartezonen. Auf diese Weise können auch leere Zonen gefunden werden, die im ganzen beobachteten Zeitintervall von keiner Person betreten werden. Dies erlaubt in vielen Fällen eine effektive automatische Hinderniserkennung. Darüber hinaus können Zonen mit einem hohen Personenaufkommen gezielt in kleinere Zonen aufgeteilt werden, um so die Personenstromsimulation zu verfeinern. Zur Verfeinerung des Gitters kann beispielsweise ein sogenanntes Quad-Tree-Verfahren verwendet werden.

Die ermittelten simulationsrelevanten Startzonen SZ und Zielzonen ZZ werden vom Zonenermittlungsmodul ZM zum Reduktionsmodul RD übermittelt. Das Reduktionsmodul RD dient dem Zweck, die Laufwege LW nach gemeinsamen Startzonen SZ und Zielzonen ZZ zu gruppieren und für die resultierenden Laufwerksgruppen mit jeweils gemeinsamer Startzone SZ und gemeinsamer Zielzone ZZ jeweils eine laufwegübergreifende, start- und zielzonenspezifische Verbindungsangabe VA zu ermitteln.

Die Anordnung KS verfügt weiterhin über einen Personenstromsimulator SIM zum Modellieren und Simulieren von Personenströmen im Bereich B. Der Personenstromsimulator SIM wird durch Kalibrierungsparameter CP kalibriert und so für die Personenstromsimulation im Bereich B konfiguriert. Durch die Anordnung KS sollen die Kalibrierungsparameter CP so bestimmt werden, dass der damit konfigurierte Personenstromsimulator SIM ein Laufverhalten von Personen im Bereich B möglichst genau nachbildet.

Die Kalibrierungsparameter CP können zumindest teilweise die Modelldaten MD umfassen, insbesondere Angaben über eine Geometrie, über zugängliche Teilbereiche, über Wegetypen, über Räume, über Raumtypen, über Hindernisse, über Engstellen und/oder über andere laufwegerelevante Parameter des Bereichs B. Die laufwegrelevanten Parameter können hierbei einen Personendurchsatz und/oder ein Bewegungs- oder Geschwindigkeitsprofil für spezifische Teilbereiche, wie Gänge, Treppen, Rolltreppen, Straßen, Gehwege und/oder Wartebereiche betreffen. Insofern durch die Erfindung viele laufwegrelevante Eigenschaften des Bereichs B automatisch anhand der beobachteten Laufwege LW vermittelt werden können, sind zur Ausführung eines erfindungsgemäßen Verfahrens in der Regel weniger vorbekannte Modelldaten erforderlich als bei bekannten Verfahren.

Darüber hinaus verfügt die Anordnung KS über einen Generator GEN zum Generieren einer Vielzahl von Varianten der Kalibrierungsparameter CP. Die Generierung kann vorzugsweise auch zufallsbasiert erfolgen. Gegebenenfalls kann der Generator GEN oder die durch ihn generierten Kalibrierungsparameter CP mit Modelldaten MD aus der Datenbank DB initialisiert werden. Die generierten Varianten der Kalibrierungsparameter CP werden vom Generator GEN zum Personenstromsimulator SIM übermittelt.

Der Personenstromsimulator SIM wird mit einer jeweiligen Variante der Kalibrierungsparameter CP konfiguriert und simuliert darauf basierend eine Vielzahl von Laufwegen durch den Bereich B. Aus den simulierten Laufwegen werden - wie oben im Zusammenhang mit den beobachteten Laufwegen LW beschrieben - simulierte Verbindungsangaben SVA, zum Beispiel mit Hilfe des Reduktionsmoduls RD abgeleitet. Die simulierten Verbindungsangaben SVA werden daraufhin mit den auf beobachteten Laufwegen LW basierenden Verbindungsangaben VA verglichen. Die Verbindungsangaben VA und SVA können dabei, wie oben bereits erwähnt, jeweils durch eine Verbindungsmatrix dargestellt werden. Im Rahmen des Vergleichs wird eine Abweichung D zwischen den Verbindungsangaben VA und den simulierten Verbindungsangaben SVA berechnet, zum Beispiel als Betrag oder Quadrat einer Differenz gemäß D = |SVA - VA| oder D = (SVA - VA)².

Die Abweichung D wird zum Generator GEN zurückgeführt, um die Generierung der Kalibrierungsparameter CP so zu beeinflussen, dass die Abweichung D minimiert wird. Zu diesem Zweck stehen eine Vielzahl von effizienten numerischen Optimierungsverfahren zur Verfügung. Insbesondere können genetische Optimierungsverfahren, ein trial-and-error-Verfahren, Maschinenlernverfahren, gradientenbasierte Optimierungsverfahren, stochastische Gradientenverfahren und/oder eine Partikelschwarmoptimierung verwendet werden.

Auf diese Weise können optimierte Kalibrierungsparameter CP ermittelt werden, basierend auf denen der Personenstromsimulator SIM realitätsnahe Laufwege simulieren kann. Gleichzeitig kann durch die optimierten Kalibrierungsparameter CP ein Laufverhalten von im Bereich B befindlichen Personen in speichereffizienter Weise dargestellt oder kodiert werden.

Durch den mit den optimierten Kalibrierungsparametern CP konfigurierten Personenstromsimulator SIM können dann Personenströme im Bereich B realitätsnah simuliert oder in die Zukunft extrapoliert, das heißt prädiziert werden.

Im vorliegenden Ausführungsbeispiel werden durch den Personenstromsimulator SIM Angaben SPS über aktuell simulierte Personenströme und Angaben PPS über prädizierte Personenströme zu einer Ausgabeeinheit OUT der Anordnung KS übermittelt.

Durch die Ausgabeeinheit OUT werden abhängig von den übermittelten Angaben SPS und PPS Personenleitinformationen, Fluchtwegangaben, Wegeangaben, Richtungsangaben, Warnsignale, Alarmsignale und/oder Steuersignale ausgegeben. Auf diese Weise kann zum Beispiel eine dynamische Fluchtwegbeschilderung realisiert werden oder im Bereich B befindliche Personen in optimierter Weise geleitet werden.

Durch die Kalibrierung des Personenstromsimulators SIM anhand von im Bereich B beobachteten Laufwegen LW kann der Personenstromsimulator SIM in vielen Fällen automatisch und dynamisch an Veränderungen im Bereich B oder an wechselnde Bereiche angepasst werden. Infolgedessen benötigt der Personenstromsimulator oft signifikant weniger Modelldaten als bekannte Personenstromsimulatoren. Auf diese Weise kann eine Konfiguration eines Personenstromsimulators in vielen Fällen erheblich vereinfacht werden.

## Patentansprüche

1. Computerimplementiertes Verfahren zum Kalibrieren eines Personenstromsimulators (SIM) für einen vorgegebenen Bereich (B), wobei
a) mittels einer Kamera (C, C1, C2) fortlaufend Bilder (PIC) im Bereich (B) aufgenommen werden,
b) aus einer zeitlichen Abfolge von aufgenommenen Bildern (PIC) Laufwege (LW, LW1,...,LW4) von im Bereich (B) befindlichen Personen (P) ermittelt werden,
c) für die ermittelten Laufwege (LW, LW1,...,LW4) jeweils eine Startzone (SZ) und eine Zielzone (ZZ) im Bereich (B) ermittelt werden,
d) für Laufwege (LW) mit gemeinsamer Startzone (SZ) und gemeinsamer Zielzone (ZZ) eine laufwegübergreifende, start- und zielzonenspezifische Verbindungsangabe (VA) ermittelt wird,
e) der Personenstromsimulator (SIM) anhand der Verbindungsangaben (VA) darauf trainiert wird, Personenströme zwischen den Startzonen (SZ) und Zielzonen (ZZ) zu reproduzieren, wodurch der Personenstromsimulator (SIM) für eine Personenstromsimulation im Bereich (B) kalibriert wird, und
f) mittels des kalibrierten Personenstromsimulators (SIM) Personenströme im Bereich (B) anhand von aktuell aufgenommenen Bildern (PIC) prädiziert werden,
und wobei
- eine Menge von simulationsrelevanten Startzonen (SZ) und Zielzonen (ZZ) ermittelt wird,
- für einen jeweiligen Laufweg (LW, LW1,...,LW4) ermittelt wird, in welche der simulationsrelevanten Startzonen (SZ) eine Startposition dieses Laufwegs (LW, LW1,...,LW4) und/oder in welche der simulationsrelevanten Zielzonen (ZZ) eine Zielposition dieses Laufwegs (LW, LW1,...,LW4) fällt, und
- falls eine Startposition des jeweiligen Laufwegs (LW, LW1,...,LW4) in keine der simulationsrelevanten Startzonen (SZ) oder eine Endposition dieses Laufwegs (LW, LW1,...,LW4) in keine der simulationsrelevanten Zielzonen (ZZ) fällt, dieser Laufweg (LW, LW1,...,LW4) mit einem weiteren Laufweg zu einem gemeinsamen Laufweg zusammengefasst wird.

2. Verfahren nach Anspruch 1, **dadurch gekennzeichnet,**
**dass** beim Training des Personenstromsimulators (SIM),
- Kalibrierungsparameter (CP) des Personenstromsimulators (SIM) variiert werden,
- abhängig von den variierten Kalibrierungsparametern (SIM) Laufwege durch den Bereich (B) simuliert werden,
- aus den simulierten Laufwegen simulierte Verbindungsangaben (SVA) abgeleitet und eine Abweichung (D) der simulierten Verbindungsabgaben (SVA) von den ermittelten Verbindungsangaben (VA) ermittelt wird, und
- die Kalibrierungsparameter (CP) derart variiert werden, dass die Abweichung (D) verringert wird.

3. Verfahren nach einem der vorhergehenden Ansprüche, **dadurch gekennzeichnet,**
**dass** die Verbindungsangaben (VA, SVA) in einer durch die Startzonen und die Zielzonen indizierten Verbindungsmatrix gespeichert werden.

4. Verfahren nach einem der vorhergehenden Ansprüche, **dadurch gekennzeichnet,**
**dass** eine Verbindungsangabe (VA, SVA) zu einer jeweiligen Startzone (SZ) und einer jeweiligen Zielzone (ZZ)
- eine Anzahl (N) von ermittelten Laufwegen (LW) zwischen der jeweiligen Startzone (SZ) und der jeweiligen Zielzone (ZZ),
- ein Geschwindigkeitsprofil (GP) dieser Laufwege (LW),
- einen durchschnittlichen, minimalen und/oder maximalen Zeitbedarf (ΔT) für diese Laufwege (LW),
- eine Personendichte (RHO) entlang dieser Laufwege (LW), und/oder
- einen frühesten und/oder spätesten Zeitpunkt eines Loslaufens von der jeweiligen Startzone (SZ) und/oder einen frühesten und/oder spätesten Zeitpunkt einer Ankunft in der jeweiligen Zielzone (ZZ)
umfasst.

5. Verfahren nach einem der vorhergehenden Ansprüche, **dadurch gekennzeichnet,**
**dass** in den aufgenommenen Bildern (PIC) Positionen von Personen (P) erfasst werden, und
**dass** ein jeweiliger Laufweg (LW, LW1,...,LW4) anhand von in aufeinanderfolgenden Bildern (PIC) erfassten Positionen einer Person (P) ermittelt wird.

6. Verfahren nach einem der vorhergehenden Ansprüche, **dadurch gekennzeichnet,**
**dass** ein räumlicher und/oder zeitlicher Abstand zwischen einer Endposition eines ersten Laufwegs (LW1, LW2) und einer Startposition eines zweiten Laufwegs (LW3, LW4) ermittelt wird, und
**dass** abhängig vom ermittelten Abstand der erste Laufweg (LW1, LW2) mit dem zweiten Laufweg (LW3, LW4) zu einem gemeinsamen Laufweg zusammengefasst wird.

7. Verfahren nach einem der vorhergehenden Ansprüche, **dadurch gekennzeichnet,**
**dass** ein Laufverhalten von im Bereich befindlichen Personen (P) durch Kalibrierungsparameter (CPO) des Personenstromsimulators (SIM) dargestellt wird, und
**dass** das Laufverhalten durch Verarbeitung der Kalibrierungsparameter (CP, CPO) ausgewertet wird.

8. Verfahren nach einem der vorhergehenden Ansprüche, **dadurch gekennzeichnet, dass**
abhängig von den prädizierten Personenströmen eine Personenleitinformation, eine Fluchtwegangabe, eine Wegeangabe, eine Richtungsangabe, ein Warnsignal und/oder ein Alarmsignal ausgegeben wird.

9. Anordnung (KS) zum Kalibrieren eines Personenstromsimulators, eingerichtet zum Ausführen eines Verfahrens nach einem der vorhergehenden Ansprüche.

10. Computerprogrammprodukt, eingerichtet zum Ausführen eines Verfahrens nach einem der Ansprüche 1 bis 8.

11. Computerlesbares Speichermedium mit einem gespeicherten Computerprogrammprodukt nach Anspruch 10.

## Claims

1. Computer-implemented method for calibrating a passenger flow simulator (SIM) for a predefined region (B), wherein
a) images (PIC) are continuously recorded in the region (B) by means of a camera (C, C1, C2),
b) paths (LW, LW1,...,LW4) of passengers (P) located in the region (B) are determined from a temporal sequence of recorded images (PIC),
c) a starting zone (SZ) and a target zone (ZZ) in the region (B) are determined in each case for the determined paths (LW, LW1,...,LW4),
d) a path-spanning connection specification (VA) that is specific to the starting and target zones is determined for paths (LW) with a common starting zone (SZ) and a common target zone (ZZ),
e) the passenger flow simulator (SIM) is trained on the basis of the connection specifications (VA) to reproduce passenger flows between the starting zones (SZ) and target zones (ZZ), as a result of which the passenger flow simulator (SIM) is calibrated for passenger flow simulation in the region (B), and
f) passenger flows in the region (B) are predicted on the basis of currently recorded images (PIC) using the calibrated passenger flow simulator (SIM), and wherein
- a set of simulation-relevant starting zones (SZ) and target zones (ZZ) is determined,
- for a respective path (LW, LW1,...,LW4), it is determined into which of the simulation-relevant starting zones (SZ) a starting position of this path (LW, LW1,...,LW4) falls and/or into which of the simulation-relevant target zones (ZZ) a target position of this path (LW, LW1,...,LW4) falls, and
- if a starting position of the respective path (LW, LW1,...,LW4) does not fall into any of the simulation-relevant starting zones (SZ) or an end position of this path (LW, LW1,...,LW4) does not fall into any of the simulation-relevant target zones (ZZ), this path (LW, LW1,...,LW4) is combined with a further path to form a common path.

2. Method according to Claim 1, **characterized**
**in that**, during training of the passenger flow simulator (SIM),
- calibration parameters (CP) of the passenger flow simulator (SIM) are varied,
- paths through the region (B) are simulated depending on the varied calibration parameters (SIM),
- simulated connection specifications (SVA) are derived from the simulated paths and a deviation (D) of the simulated connection specifications (SVA) from the determined connection specifications (VA) is determined, and
- the calibration parameters (CP) are varied such that the deviation (D) is reduced.

3. Method according to one of the preceding claims,
**characterized**
**in that** the connection specifications (VA, SVA) are stored in a connection matrix indexed by the starting zones and the target zones.

4. Method according to one of the preceding claims,
**characterized**
**in that** a connection specification (VA, SVA) for a respective starting zone (SZ) and a respective target zone (ZZ) comprises
- a number (N) of determined paths (LW) between the respective starting zone (SZ) and the respective target zone (ZZ),
- a speed profile (GP) of these paths (LW),
- an average, minimum and/or maximum time requirement (ΔT) for these paths (LW),
- a passenger density (RHO) along these paths (LW), and/or
- an earliest and/or latest time at which the respective starting zone (SZ) is left and/or an earliest and/or latest time of arrival in the respective target zone (ZZ).

5. Method according to one of the preceding claims,
**characterized**
**in that** positions of passengers (P) are captured in the recorded images (PIC), and
**in that** a respective path (LW, LW1,..., LW4) is determined on the basis of positions of a passenger (P) captured in successive images (PIC).

6. Method according to one of the preceding claims,
**characterized**
**in that** a spatial and/or temporal distance between an end position of a first path (LW1, LW2) and a starting position of a second path (LW3, LW4) is determined, and
**in that**, depending on the determined distance, the first path (LW1, LW2) is combined with the second path (LW3, LW4) to form a common path.

7. Method according to one of the preceding claims,
**characterized**
**in that** a walking behaviour of passengers (P) located in the region is represented by calibration parameters (CPO) of the passenger flow simulator (SIM), and
**in that** the walking behaviour is evaluated by processing the calibration parameters (CP, CPO).

8. Method according to one of the preceding claims,
**characterized in that**
depending on the predicted passenger flows, passenger guidance information, an escape route indication, a route indication, a direction indication, a warning signal and/or an alarm signal is/are output.

9. Arrangement (KS) for calibrating a passenger flow simulator, configured to carry out a method according to one of the preceding claims.

10. Computer program product configured to carry out a method according to one of Claims 1 to 8.

11. Computer-readable storage medium containing a computer program product according to Claim 10.

## Revendications

1. Procédé mis en œuvre par ordinateur pour l'étalonnage d'un simulateur de flux de personnes (SIM) pour une région (B) prédéfinie, dans lequel
a) des images (PIC) sont enregistrées en continu dans la région (B) au moyen d'une caméra (C, C1, C2),
b) des itinéraires (LW, LW1, ..., LW4) de personnes (P) se trouvant dans la région (B) sont déterminés à partir d'une séquence temporelle d'images (PIC) enregistrées,
c) pour les itinéraires (LW, LW1, ..., LW4) déterminés, respectivement une zone de départ (SZ) et une zone cible (ZZ) sont déterminées dans la région (B),
d) pour des itinéraires (LW) avec une zone de départ (SZ) commune et une zone cible (ZZ) commune, une indication de connexion (VA) transversale à l'itinéraire, spécifique aux zones de départ et cible est déterminée,
e) le simulateur de flux de personnes (SIM) est entraîné, à l'aide des indications de connexion (VA), à reproduire des flux de personnes entre les zones de départ (SZ) et les zones cibles (ZZ), moyennant quoi le simulateur de flux de personnes (SIM) est étalonné pour une simulation de flux de personnes dans la région (B), et
f) au moyen du simulateur de flux de personnes (SIM) étalonné, des flux de personnes sont prédits dans la région (B) à l'aide d'images (PIC) actuellement enregistrées,
et dans lequel
- une quantité de zones de départ (SZ) et de zones cibles (ZZ) pertinentes pour une simulation est déterminée,
- pour un itinéraire (LW, LW1, ..., LW4) respectif, il est déterminé dans laquelle des zones de départ (SZ) pertinentes pour une simulation tombe une position de départ de cet itinéraire (LW, LW1, ..., LW4) et/ou dans laquelle des zones cibles (ZZ) pertinentes pour une simulation tombe une position cible de cet itinéraire (LW, LW1, ..., LW4), et
- dans le cas où une position de départ de l'itinéraire (LW, LW1, ..., LW4) respectif ne tombe dans aucune des zones de départ (SZ) pertinentes pour une simulation ou une position finale de cet itinéraire (LW, LW1, ..., LW4) ne tombe dans aucune des zones cibles (ZZ) pertinentes pour une simulation, cet itinéraire (LW, LW1, ..., LW4) est fusionné avec un autre itinéraire en un itinéraire commun.

2. Procédé selon la revendication 1, **caractérisé**
**en ce que**, lors de l'entraînement du simulateur de flux de personnes (SIM),
- des paramètres d'étalonnage (CP) du simulateur de flux de personnes (SIM) sont amenés à varier,
- en fonction des paramètres d'étalonnage (SIM) amenés à varier, des itinéraires sont simulés à travers la région (B),
- à partir des itinéraires simulés, des indications de connexion simulées (SVA) sont déduites et un écart (D) des indications de connexion simulées (SVA) par rapport aux indications de connexion (VA) déterminées est déterminé, et
- les paramètres d'étalonnage (CP) sont amenés à varier de telle sorte que l'écart (D) soit réduit.

3. Procédé selon l'une des revendications précédentes,
**caractérisé**
**en ce que** les indications de connexion (VA, SVA) sont stockées dans une matrice de connexion indexée par les zones de départ et les zones cibles.

4. Procédé selon l'une des revendications précédentes,
**caractérisé**
**en ce qu'**une indication de connexion (VA, SVA) par rapport à une zone de départ (SZ) respective et à une zone cible (ZZ) respective comporte
- un nombre (N) d'itinéraires (LW) déterminés entre la zone de départ (SZ) respective et la zone cible (ZZ) respective,
- un profil de vitesse (GP) de cet itinéraire (LW),
- un temps nécessaire (ΔT) moyen, minimal et/ou maximal pour cet itinéraire (LW),
- une densité de personnes (RHO) le long de cet itinéraire (LW), et/ou
- un moment le plus précoce et/ou le plus tardif d'un début de marche depuis la zone de départ (SZ) respective et/ou un moment le plus précoce et/ou le plus tardif d'une arrivée dans la zone cible (ZZ) respective.

5. Procédé selon l'une des revendications précédentes,
**caractérisé**
**en ce que** des positions de personnes (P) sont détectées dans les images (PIC) enregistrées, et
**en ce qu'**un itinéraire (LW, LW1, ..., LW4) respectif est déterminé à l'aide de positions d'une personne (P) détectées dans des images (PIC) successives.

6. Procédé selon l'une des revendications précédentes,
**caractérisé**
**en ce qu'**une distance spatiale et/ou temporelle est déterminée entre une position finale d'un premier itinéraire (LW1, LW2) et une position de départ d'un deuxième itinéraire (LW3, LW4), et en ce qu'en fonction de la distance déterminée, le premier itinéraire (LW1, LW2) est fusionné avec le deuxième itinéraire (LW3, LW4) en un itinéraire commun.

7. Procédé selon l'une des revendications précédentes,
**caractérisé**
**en ce qu'**un comportement de marche de personnes (P) se trouvant dans la région est représenté par des paramètres d'étalonnage (CPO) du simulateur de flux de personnes (SIM), et
**en ce que** le comportement de marche est évalué par traitement des paramètres d'étalonnage (CP, CPO).

8. Procédé selon l'une des revendications précédentes,
**caractérisé**
**en ce qu'**en fonction des flux de personnes prédits, une information de guidage de personnes, une indication d'issue de secours, une indication de chemin, une indication de direction, un signal d'avertissement et/ou un signal d'alarme sont émis.

9. Agencement (KS) pour l'étalonnage d'un simulateur de flux de personnes, conçu pour l'exécution d'un procédé selon l'une des revendications précédentes.

10. Produit de programme informatique, conçu pour l'exécution d'un procédé selon l'une des revendications 1 à 8.

11. Support de stockage lisible par ordinateur avec un produit de programme informatique selon la revendication 10 stocké.
